# EUROPEAN PATENT SPECIFICATION

(11) **EP 2 831 013 B1**
(45) Date of publication and mention of the grant of the patent: **02.01.2019**
(21) Application number: 13714834.2
(22) Date of filing: 27.03.2013
(51) Int. Cl.: E04B 1/94, F16L 59/02, B32B 5/20, C04B 28/00, B32B 13/04, B32B 15/04, B32B 27/06, E04F 13/08, C04B 111/28

(54) **FIRE RESISTANT STRUCTURE COMPRISING GEOPOLYMER-AEROGEL COMPOSITE LAYER**
FEUERBESTÄNDIGE STRUKTUR, MIT EINER GEOPOLYMER-AEROGEL KOMPOSITSCHICHT
STRUCTURE RÉSISTANT AU FEU, COMPRENANT UNE COUCHE DE COMPOSITE GÉOPOLYMÈRE-AÉROGEL

(30) Priority: 30.03.2012 US 201261617928 P
(43) Date of publication of application: 04.02.2015
(73) Proprietor: Dow Global Technologies LLC, Midland, MI 48674 (US)
(72) Inventor: KIM, Dongkyu, Midland, Michigan 48642 (US); CIESLINSKI, Robert C., Midland, Michigan 48642 (US); VAIRO, Giuseppe, I-42015 Correggio (IT); MATTEUCCI, Scott T ., Midland, Michigan 48640 (US); HAN, Chan, Midland, Michigan 48642 (US); BERTUCELLI, Luigi, 42100 Reggio Nell'Emilia (IT)
(74) Representative: Beck Greener
(86) International application number: PCT/US2013/034115
(87) International publication number: WO 2013/148843

(56) References cited:
- EP-A1- 1 887 065
- EP-A1- 2 481 859
- WO-A1-93/21126
- WO-A2-2011/066209
- GB-A- 2 471 765
- US-A1- 2012 037 838

## Description

### Field of Disclosure

The present disclosure relates generally to composites, and more particularly to geopolymer-aerogel composites.

### Background

Geopolymers are inorganic polymers. Geopolymers can be formed by reacting geopolymer precursors, such as aluminosilicate oxides and alkali silicates. Industrial by-products such as fly ashes, mine tailings, and/or bauxite residues, may be utilized to form some geopolymers.

Geopolymers have been used for a various applications. Geopolymers can be advantageous, as compared to some other materials, in that geopolymers can utilize by-products currently treated as wastes to provide useful and valuable products and/or geopolymers can enhance product features across building materials markets. Additional uses of geopolymers are desirable.

### Summary

The present disclosure provides a fire resistant structure having a foam material located between a first facing and a second facing, and a geopolymer-aerogel composite layer between the foam material and the first facing. The geopolymer-aerogel composite layer is formed by curing a geopolymer precursor-aerogel composition having an aluminosilicate reactant, an alkaline activator, an aerogel additive, and a continuous medium.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Brief Description of the Figures

Figure 1A illustrates a portion of a fire resistant structure in accordance with a number of embodiments of the present disclosure.
Figure 1B is cross-sectional view of Figure 1A taken along cut line 1A-1A of Figure 1A.
Figure 2 is cross-sectional view of a fire resistant composite structure in accordance with a number of embodiments of the present disclosure.

### Detailed Description

Geopolymer precursor-aerogel compositions are described herein. As an example, a geopolymer precursor-aerogel composition can include an aluminosilicate reactant, an alkaline activator, an aerogel additive, and a continuous medium. These geopolymer precursor-aerogel compositions can be cured to form geopolymer-aerogel composites.

The geopolymer-aerogel composites, formed from the geopolymer precursor-aerogel compositions disclosed herein, may be useful for a variety of applications. For example, the geopolymer-aerogel composites may provide improved fire resistance for structural insulating panels disclosed herein, as compared to other panel approaches, such as panels not having the geopolymer-aerogel composite.

Structural insulating panels can be used as a building material. Structural insulating panels can include a foam material, e.g., a layer of rigid foam, sandwiched between two layers of a structural board. The structural board can be organic and/or inorganic. For example, the structural board can be a metal, metal alloy, gypsum, plywood, and combinations thereof, among other types of board.

Structural insulating panels may be used in variety of different applications, such as walling, roofing, and/or flooring. Structural insulating panels may be utilized in commercial buildings, residential buildings, and/or freight containers, for example. Structural insulating panels may help to increase energy efficiency of buildings and/or containers utilizing the panels, as compared to other buildings or containers that do not employ structural insulating panels.

GB 2471765 A describes load-bearing composite structural building units comprising a geopolymeric cement layer and an expanded polystyrene foam layer.

EP 2481859 describes a composite aerogel thermal insulation system. Aerogel containing layers are joined together by a geopolymer adhesive layer

Structural insulating panels have desirable stability and durability. For example, structural insulating panels can last throughout the useful lifetime of the building or container employing the panels. Thereafter, the panels can be reused or recycled.

Another application in which the geopolymer-aerogel composites, formed from geopolymer precursor-aerogel compositions, may be employed includes, but is not limited to, filling insulation. For example, the geopolymer-aerogel composites may be utilized to fill spaces, for instance near pipes, water heaters, or other devices, where thermal resistance is desired. Another application in which geopolymer-aerogel composites, formed from the geopolymer precursor-aerogel compositions, may be employed is as a component of an external wall insulation system. As an example, an external wall insulation system can include an insulation layer and a finish layer. The geopolymer-aerogel composites may be employed as the finish layer. The finish layer can provide protection, e.g., thermal protection and/or protection from exposure to outdoor weather, to the insulation layer. Additionally, the geopolymer-aerogel composites, formed from geopolymer precursor-aerogel compositions, may also be utilized for a variety of other applications, including, but not limited to, filling and/or insulating.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

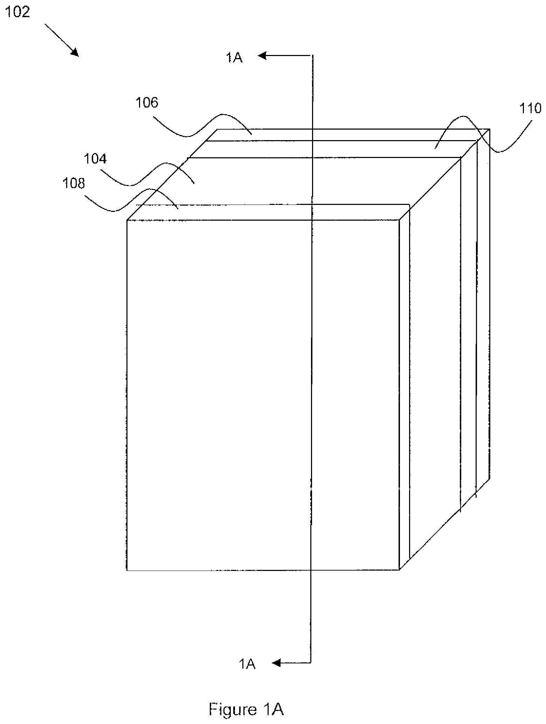

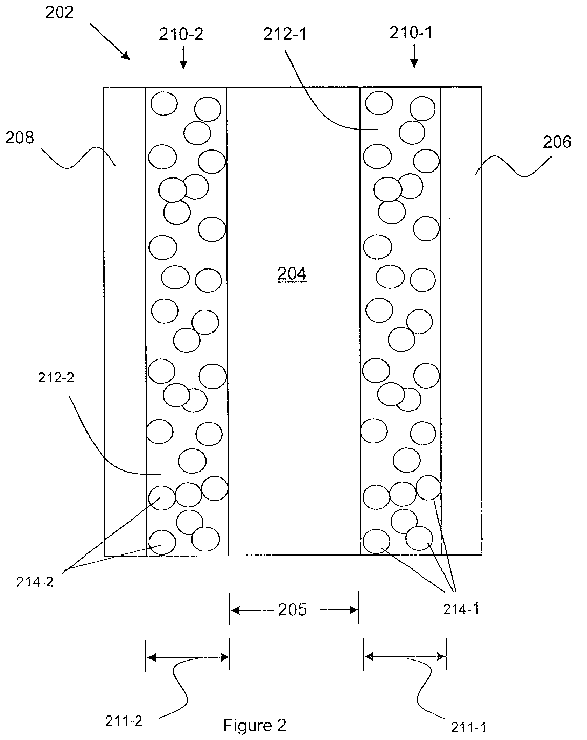

The figures herein follow a numbering convention in which the first digit or digits correspond to the drawing figure number and the remaining digits identify an element or component in the drawing. Similar elements or components between different figures may be identified by the use of similar digits. For example, 104 may reference element "4" in Figure 1A, and a similar element may be referenced as 204 in Figure 2. An element including an associated digit may also be referred to without reference to a specific figure. For example, "element 4" may be referenced in the description without reference to a specific figure.

As mentioned, geopolymer precursor-aerogel compositions are described herein. The geopolymer precursor-aerogel compositions include an aluminosilicate reactant. The aluminosilicate reactant, which may also be referred to as a geopolymer precursor, reacts with other geopolymer precursors, discussed herein, to form a geopolymer.

The aluminosilicate reactant is an aluminosilicate. Aluminosilcates are compounds that include an aluminum atom, a silicon atom, and an oxygen atom. The aluminosilicate reactant can be selected from the group consisting of fly ash, calcined clay, metallurgical slag, and combinations thereof.

Fly ash is byproduct that is formed from the combustion of coal. For example, electric power plant utility furnaces can burn pulverized coal and produce fly ash. The structure, composition, and other properties of fly ash can depend upon the composition of the coal and the combustion process by which fly ash is formed. American Society for Testing and Materials (ASTM) C618 standard recognizes differing classes of fly ashes, such as Class C fly ash and Class F fly ash. Class C fly ash can be produced from burning lignite or sub-bituminous coal. Class F fly ash can be produced from burning anthracite or bituminous coal. For one or more embodiments, the fly ash can be selected from the group consisting of Class F fly ash, Class C fly ash, and combinations thereof.

As used herein, "clay" refers to hydrous aluminum phyllosilicates. Clay can include variable amounts of iron, magnesium, alkali metals, and/or alkaline earth metals. Examples of clay include, but are not limited to, antigorite, chrysotile, lizardite, halloysite, kaolinite, illite, montmorillonite, vermiculite, talc, palygorskite, pyrophyllite, biotite, muscovite, phlogopite, lepidolite, margarite, glauconite, and combinations thereof. Clay can undergo calcination to form calcined clay. The calcination can include exposing the clay to a temperature from 500 °C to 1000 °C for a time interval from 1 hour to 24 hours.

Metallurgical slag can be formed in a number of processes, including some processes employing a blast furnace. For example, metallurgical slag can be formed in a process that forms pig iron from iron ore. Some metallurgical slag can include 27 weight percent to 38 weight percent SiO₂ and 7 weight percent to 12 weight percent Al₂O₃. Metallurgical slag can also include, CaO, MgO, Fe₂O₃, and MnO, for example.

The geopolymer precursor-aerogel compositions include an alkaline activator. The alkaline activator, which may also be referred to as a geopolymer precursor, reacts with other geopolymer precursors, discussed herein, to form the geopolymer. Alkaline activation involves a reaction between aluminum silicates and/or compounds with alkalis and/or alkaline-earth elements in a caustic environment. For one or more embodiments the alkaline activator includes sodium silicate. Sodium silicate, as used herein, refers to compounds that include sodium oxide (Na₂O) and silica (SiO₂). The sodium silicate can have a weight ratio of SiO₂/ Na₂O from 1.30 to 5.00, where the weight ratio is expressed as quotient of a weight of SiO₂ divided by a weight of Na₂O. All individual values and sub-ranges from and including 1.30 to 5.00 are included herein and disclosed herein; for example, sodium silicate can have a weight ratio of SiO₂/ Na₂O in a range with a lower limit of 1.30, 1.40, or 1.50 to an upper limit 5.00, 4.50, or 4.00, where the weight ratio is expressed as quotient of a weight of SiO₂ divided by a weight of Na₂O. For example, sodium silicate can have a weight ratio of SiO₂/ Na₂O in a range of 1.30 to 5.00, 1.40 to 4.50, or 1.50 to 4.00, where the weight ratio is expressed as quotient of a weight of SiO₂ divided by a weight of Na₂O. Examples of sodium silicates include, but are not limited to, orthosilicate (Na₄SiO₄), metasilicate (Na₂SiO₃), disilicate (Na₂Si₂O₅), tetrasilicate (Na₂Si₄O₉), and combinations thereof. The sodium silicate may be utilized as a solid, a solution, or combinations thereof. Sodium silicate solution can include water. The water, of the sodium silicate solution, may be employed in an amount having a value that is from 40 weight percent to 75 weight percent of the sodium silicate solution, such that a weight percent of the sodium oxide, a weight percent of the silica, and the weight percent of the water, of the sodium silicate solution, sum to 100 weight percent of the sodium silicate solution. All individual values and sub-ranges from and including 40 weight percent to 75 weight percent are included herein and disclosed herein; for example, the water, of the sodium silicate solution, may in a range with a lower limit of 40 weight percent, 43 weight percent, or 45 weight percent to an upper limit 75 weight percent, 70 weight percent, or 65 weight percent, such that the weight percent of the sodium oxide, the weight percent of the silica, and the weight percent of the water, of the sodium silicate solution, sum to 100 weight percent of the sodium silicate solution. For example, the water, of the sodium silicate solution, may be in a range of 40 weight percent to 75 weight percent, 43 weight percent to 70 weight percent, or 45 weight percent to 70 weight percent, such that the weight percent of the sodium oxide, the weight percent of the silica, and the weight percent of the water, of the sodium silicate solution, sum to 100 weight percent of the sodium silicate solution.

The alkaline activator can include an alkaline hydroxide. Examples of the alkaline hydroxide include, but are not limited to, sodium hydroxide and potassium hydroxide. The alkaline activator can be selected from the group consisting of sodium hydroxide, potassium hydroxide, and combinations thereof. For embodiments including the alkaline hydroxide, the alkaline hydroxide may be employed in an amount having a value that is up to 50 weight percent of the sodium silicate solution, such that the weight percent of the sodium oxide, the weight percent of the silica, the weight percent of the water, of the sodium silicate solution, and the weight percent of the alkaline hydroxide sum to 100 weight percent of the sodium silicate solution. All individual values and sub-ranges from greater than 0 weight percent and including 50 weight percent are included herein and disclosed herein; for example, the alkaline hydroxide may be employed in range with a lower limit of greater than 0 weight percent to a an upper limit of 50 weight percent, 45 weight percent, or 40 weight percent, such that the weight percent of the sodium oxide, the weight percent of the silica, the weight percent of the water, of the sodium silicate solution, and the weight percent of the alkaline hydroxide sum to 100 weight percent of the sodium silicate solution. For example, the alkaline hydroxide may be employed in an amount having a value in a range of greater than 0 weight percent to 50 weight percent, greater than 0 weight percent to 45 weight percent, or greater than 0 weight percent to 40 weight percent, such that the weight percent of the sodium oxide, the weight percent of the silica, the weight percent of the water, of the sodium silicate solution, and the weight percent of the alkaline hydroxide sum to 100 weight percent of the sodium silicate solution.

The geopolymer precursor-aerogel compositions include a silica aerogel additive. The silica aerogel additive, in contrast to the aluminosilicate reactant and the alkaline activator, is not a geopolymer precursor. The silica aerogel additive is substantially unreactive with the geopolymer precursors of the geopolymer precursor-aerogel compositions, e.g., the aerogel maintains a mircoporous structure before, during, and after the geopolymerization reaction. The aerogel additive remains intact during the geopolymerization reaction. Surprisingly, the aerogel additive is not a significant source of silica for the geopolymer.

A gel is a non-fluid colloidal network or a polymer network that is expanded throughout its volume by a fluid. An aerogel, e.g., the aerogel additive, is a gel comprised of a microporous solid in which the fluid is a gas. As such, aerogels can be referred to as low density porous solids that have a large intraparticle pore volume. Aerogels can be formed, for example, by removing liquid in the pore from a wet gel material.

The aerogel additive can have density, e.g., a bulk density, from 0.02 grams per cubic centimeter (g/cm³) to 0.25 g/cm³. All individual values and sub-ranges from and including 0.02 g/cm³ to 0.25 g/cm³ are included herein and disclosed herein; for example, the aerogel additive can have a density in a range with a lower limit of 0.02 g/cm³, 0.03 g/cm³, or 0.04 g/cm³ to an upper limit of 0.25 g/cm³, 0.22 g/cm³, or 0.20 g/cm³. For example, the aerogel additive can have a density in a range of 0.02 g/cm³ to 0.25 g/cm³, 0.03 g/cm³ to 0.22 g/cm³, or 0.04 g/cm³ to 0.20 g/cm³.

The aerogel additive can have an average pore diameter from 1 nanometer (nm) to 70 nm. All individual values and sub-ranges from and including 1 nm to 70 nm are included herein and disclosed herein; for example, the aerogel additive can have an average pore diameter in a range with a lower limit of 1 nm, 2 nm, or 5 nm to an upper limit of 70 nm, 68 nm, or 65 nm. For example, the aerogel additive can have an average pore diameter in a range of 1 nm to 70 nm, 2 nm to 68 nm, or 5 nm to 65 nm.

The aerogel additive can have an average surface area of 300 square meters per gram (m²/g) to 1500 m²/g. All individual values and sub-ranges from and including 300 m²/g to 1500 m²/g are included herein and disclosed herein; for example, the aerogel additive can have an average surface area in a range with a lower limit of 300 m²/g, 325 m²/g, or 350 m²/g to an upper limit of 1500 m²/g, 1250 m²/g, or 1000 m²/g. For example, the aerogel additive can have an average surface area in a range of 300 m²/g to 1500 m²/g, 325 m²/g to 1250 m²/g, or 350 m²/g to 1000 m²/g.

The aerogel additive can be particulate, e.g., separate and distinct particles. The aerogel additive may be of differing sizes and/or shapes for various applications. For example, the aerogel additive can have a particle size, in any one dimension, from 0.1 micrometers to 100 millimeters. All individual values and sub-ranges from and including 0.1 micrometers to 100 millimeters are included herein and disclosed herein; for example, the aerogel additive can have a particle size, in any one dimension, in a range with a lower limit of 0.1 micrometers, 0.2 micrometers, or 0.3 micrometers to an upper limit of 100 millimeters, 95 millimeters, or 90 millimeters. For example, the aerogel additive can have an average particle size in a range of 0.1 micrometers to 100 millimeters, 0.2 micrometers to 95 millimeters, or 0.3 micrometers to 90 millimeters. In accordance with a number of embodiments of the present disclosure, the aerogel additive can be substantially spherical. However, embodiments are not so limited. In accordance with a number of embodiments of the present disclosure, the aerogel additive can be substantially non-spherical. Examples of substantially non-spherical shapes include, but are not limited to, cubic shapes, polygonal shapes, elongate shapes, irregular shapes, and combinations thereof.

The geopolymer precursor-aerogel compositions include a continuous medium. For one or more embodiments, the continuous medium can include water. For one or more embodiments, the continuous medium can be water. The continuous medium can be employed for dissolution and/or hydrolyses of one or more of the geopolymer precursors.

The geopolymer precursor-aerogel compositions can include varying amounts of components for differing applications. The aluminosilicate reactant can be from 10 weight percent to 90 weight percent of a composition weight, such that the aluminosilicate reactant weight percent, an alkaline activator weight percent, an aerogel additive weight percent, and a continuous medium weight percent sum to 100 weight percent of the composition weight. All individual values and sub-ranges from and including 10 weight percent to 90 weight percent are included herein and disclosed herein; for example, the aluminosilicate reactant can be in a range with a lower limit of 10 weight percent, 15 weight percent, or 20 weight percent to an upper limit of 90 weight percent, 85 weight percent, or 80 weight percent. The alkaline activator can be from 10 weight percent to 90 weight percent of the composition weight, such that the aluminosilicate reactant weight percent, the alkaline activator weight percent, the aerogel additive weight percent, and the continuous medium weight percent sum to 100 weight percent of the composition weight. All individual values and sub-ranges from and including 10 weight percent to 90 weight percent are included herein and disclosed herein; for example, the alkaline activator can be in a range with a lower limit of 10 weight percent, 15 weight percent, or 20 weight percent to an upper limit of 90 weight percent, 85 weight percent, or 80 weight percent. The aerogel additive can be from 0.25 weight percent to 50 weight percent of the composition weight, such that the aluminosilicate reactant weight percent, the alkaline activator weight percent, the aerogel additive weight percent, and the continuous medium weight percent sum to 100 weight percent of the composition weight. All individual values and sub-ranges from and including 0.25 weight percent to 50 weight percent are included herein and disclosed herein; for example, the aerogel additive can be in a range with a lower limit of 0.25 weight percent, 0.50 weight percent, or 1.0 weight percent to an upper limit of 50 weight percent, 45 weight percent, or 40 weight percent. The continuous medium can be from 10 weight percent to 90 weight percent of the composition weight, such that the aluminosilicate reactant weight percent, the alkaline activator weight percent, the aerogel additive weight percent, and the continuous medium weight percent sum to 100 weight percent of the composition weight. All individual values and sub-ranges from and including 10 weight percent to 90 weight percent are included herein and disclosed herein; for example, the continuous medium can be in a range with a lower limit of 10 weight percent, 15 weight percent, or 20 weight percent to an upper limit of 90 weight percent, 85 weight percent, or 80 weight percent.

The geopolymer precursor-aerogel compositions can include a surfactant. Surfactants are compounds having a hydrophilic head and a hydrophobic tail. For one or more embodiments the surfactant can be selected from the group consisting of non-ionic surfactants, cationic surfactants, anionic surfactants, amphoteric surfactants, and combinations thereof. The surfactant may be employed in various amounts for differing applications. For example, the surfactant can be employed in an amount having a value that is from 0.10 weight percent to 5.00 weight percent of a surfactant including composition weight, such that the aluminosilicate reactant weight percent, the alkaline activator weight percent, the aerogel additive weight percent, the water weight percent, and the surfactant weight percent sum to 100 weight percent of the surfactant including composition weight. All individual values and sub-ranges from and including 0.10 weight percent to 5.00 weight percent are included herein and disclosed herein; for example, the surfactant can be employed in an amount having a value that is in a range with a lower limit of 0.10 weight percent, 0.25 weight percent, or 0.40 weight percent to an upper limit of 5.00 weight percent, 3.00 weight percent, or 1.00 weight percent of the surfactant including compositional weight, such that the aluminosilicate reactant weight percent, the alkaline activator weight percent, the aerogel additive weight percent, the water weight percent, and the surfactant weight percent sum to 100 weight percent of the surfactant including composition weight. For the surfactant including composition weight the aluminosilicate reactant can from 10 weight percent to 90 weight percent of the surfactant including composition weight, the alkaline activator can be from 10 weight percent to 90 weight percent of the surfactant including composition weight, the aerogel additive can be from 0.25 weight percent to 50 weight percent of the surfactant including composition weight, and the continuous medium can be from 10 weight percent to 90 weight percent of the surfactant including composition weight, such that the aluminosilicate reactant weight percent, the alkaline activator weight percent, the aerogel additive weight percent, the continuous medium weight percent, and the surfactant weight percent sum to 100 weight percent of the composition weight.

Non-ionic surfactants do not have an electrical charge. Examples of non-ionic surfactants include, but are not limited to, alkyl polysaccharides, amine oxides, block copolymers, castor oil ethoxylates, ceto-oleyl alcohol ethoxylates, ceto-stearyl alcohol, ethoxylates, decyl alcohol ethoxylates, dinonyl phenol ethoxylates, dodecyl, phenol ethoxylates, end-capped ethoxylates, ether amine derivatives, ethoxylated alkanolamides, ethylene glycol esters, fatty acid alkanolamides, fatty alcohol alkoxylates, lauryl alcohol ethoxylates, mono-branched alcohol ethoxylates, natural alcohol ethoxylates, nonyl phenol ethoxylates, octyl phenol ethoxylates, oleyl amine ethoxylates, random copolymer alkoxylates, sorbitan ester ethoxylates, stearic acid ethoxylates, stearyl amine ethoxylates, synthetic alcohol ethoxylates, tall oil fatty acid ethoxylates, tallow amine, ethoxylates, trid tridecanol ethoxylates, and combinations thereof.

Cationic surfactants have a positively charged head in solution. Examples of cationic surfactants include, but are not limited to, alkyl dimethylamines, alkyl amidopropylamines, alkyl imidazoline derivatives, quaternised amine ethoxylates, quaternary ammonium compounds, and combinations thereof.

Anionic surfactants have a negatively charged head in solution. Examples of anionic surfactants include, but are not limited to, alkyl ether phosphates, alkyl ether carboxylic acids and salts, alkyl ether sulphates, alkyl naphthalene sulphonates, alkyl phosphates, alkyl benzene sulphonic acids and salts, alkyl phenol ether phosphates, alkyl phenol ether sulphates, alpha olefin sulphonates, aromatic hydrocarbon sulphonic acids, salts and blends, condensed naphthalene sulphonates, di-alkyl sulphosuccinates, fatty alcohol sulphates, mono-alkyl sulphosuccinates, alkyl sulphosuccinmnates, naphthalene sulphonates, and combinations thereof.

Amphoteric surfactants can be anionic (negatively charged), cationic (positively charged) or non-ionic (no charge) in solution, depending on the pH of the water. Examples of amphoteric surfactants include, but are not limited to, alkyl ampho(di)acetates, amido betaines, alkyl betaines, and combinations thereof.

The geopolymer precursor-aerogel compositions are cured to form a geopolymer-aerogel composite. Composites are materials that are formed from two or more components that each have distinct properties, such as the geopolymer and the aerogel. As mentioned, the geopolymer-aerogel composites may provide improved fire resistance for structural insulating panels disclosed herein, as compared to other panel approaches, such as panels not having the geopolymer-aerogel composite.

Geopolymer, e.g., the geopolymer of the geopolymer-aerogel composite, can be represented by Formula I:

(Formula I) (M)_{y}[-(SiO₂)_{z}-AlO₂]ₓ • w H₂O

wherein each M independently is a cation of Group 1 of the Periodic Table of the Elements; x is an integer of 2 or higher and represents a number of polysialate repeat units; y is a rational or irrational number selected so that a ratio of y to x is greater than zero (y/x > 0), and preferably from greater than zero to less than or equal to 2 (0 < y/x ≤ 2); z is a rational or irrational number of from 1 to 35; and w is a rational or irrational number such that ratio of w to x (w/x) represents a ratio of moles of water per polysialate repeat unit. The z represents a molar ratio equal to moles of silicon atoms to moles of aluminum atoms (Si/Al) in the polysialate. The distribution of the SiO₂ functional groups in the geopolymer may be characterized as being random. Thus, z can be a rational or irrational number. Unless otherwise noted, the phrase "Periodic Table of the Elements" refers to the official periodic table, version dated June 22, 2007, published by the International Union of Pure and Applied Chemistry (IUPAC).

The geopolymer-aerogel composites can be formed by curing the geopolymer precursor-aerogel compositions at a temperature of 20 °C to 150 °C. All individual values and sub-ranges from and including 20 °C to 150 °C are included herein and disclosed herein; for example, the geopolymer-aerogel composites can be formed by curing the geopolymer precursor-aerogel compositions at a temperature in a range with a lower limit of 20 °C, 25 °C, 30 °C to an upper limit of 150 °C, 140 °C, or 130 °C. For example, the geopolymer-aerogel composites can be formed by curing the geopolymer precursor-aerogel compositions at a temperature in a range of 20 °C to 150 °C, 25 °C to 140 °C, or 30 °C to 130 °C. The geopolymer-aerogel composites can be formed by curing the geopolymer precursor-aerogel compositions for a time interval of less than one minute up to 28 days, for example. All individual values and sub-ranges from and including less than one minute to 28 days are included herein and disclosed herein; for example, geopolymer-aerogel composites can be formed by curing the geopolymer precursor-aerogel compositions for a time interval in a range with a lower limit of less than one minute, one minute, or 5 minutes to an upper limit of 28 days, 24 days, or 20 days. For example, the geopolymer-aerogel composites can be formed by curing the geopolymer precursor-aerogel compositions for a time interval in a range from less than one minute to 28 days, one minute to 24 days, or 5 minutes to 20 days. The geopolymer precursor-aerogel compositions can be cast into a die, e.g. a mold, and cured. The geopolymer precursor-aerogel compositions are applied to a substrate, e.g. such as the foam material and/or facing discussed herein, and cured thereon. The geopolymer precursor-aerogel compositions can be applied to the substrate by various procedures, such as dipping, spraying, rolling, troweling, or another procedure.

For one or more embodiments, the silica aerogel additive can be from 5 volume percent to 95 volume percent of the geopolymer-aerogel composite layer, such that the silica aerogel additive and the geopolymer sum to be 100 volume percent of the geopolymer-aerogel composite layer. All individual values and sub-ranges from and including 5 volume percent to 95 volume percent are included herein and disclosed herein; for example, the aerogel additive can be in a range with a lower limit of 5 volume percent, 10 volume percent, 15 volume percent to an upper limit of 95 volume percent, 85 volume percent, or 75 volume percent, such that the aerogel additive and the geopolymer sum to be 100 volume percent of the geopolymer-aerogel composite layer. For example, the aerogel additive can be in a range of 5 volume percent to 95 volume percent, 10 volume percent to 85 volume percent, or 15 volume percent to 75 volume percent, such that the aerogel additive and the geopolymer sum to be 100 volume percent of the geopolymer-aerogel composite layer.

Figure 1A illustrates of a portion of a fire resistant structure 102 in accordance with a number of embodiments of the present disclosure. For various applications, the fire resistant structures, as disclosed herein, may be referred to as sandwich panels, structural insulating panels, or self-supporting insulating panels, among other references.

The fire resistant structures, as disclosed herein, may be formed by a variety of processes. As an example, the fire resistant structures may be formed by a continuous process, such as a continuous lamination process employing a double conveyor arrangement wherein components of a geopolymer precursor-aerogel composition can be deposited, e.g., poured or sprayed, onto the first facing surface, which may be flexible or rigid; then, a reaction mixture for forming a foam material can be deposited, e.g., poured or sprayed, onto the curing geopolymer precursor-aerogel composition; then the second facing surface can be contacted with the reaction mixture for forming the foam material. For various applications other formation processes may be employed. For example, the components of a geopolymer precursor-aerogel composition, can be deposited, e.g., poured or sprayed, onto a surface of the second facing. Additionally, the fire resistant structures, as disclosed herein, may be formed by a discontinuous process including depositing, e.g., pouring or spraying, the components of a geopolymer precursor-aerogel composition on the first facing and/or the second facing. Then the first and second facings, having geopolymer-aerogel thermal protection layers on their interior surfaces, may be placed in a press and a reaction mixture for forming a foam material can be deposited, e.g., poured or injected, between the first and second facings.

The fire resistant structure 102 may be utilized for a variety of applications. The fire resistant composite structure 102 includes a foam material 104 located between a first facing 106 and a second facing 108. The fire resistant composite structure 102 includes a geopolymer-aerogel composite layer 110 between the foam material 104 and the first facing 106.

The foam material 104 is a thermoset foam, e.g. polymeric foam that has been formed by an irreversible reaction to a cured state. The foam material 104 is a polyisocyanurate foam, a polyurethane foam, a phenolic foam, and combinations thereof, among other thermoset foams. As an example, the foam material 104 may be a rigid polyurethane/polyisocyanurate (PU/PIR) foam. Polyisocyanurate foams can be formed by reacting a polyol, e.g., a polyester glycol, and an isocyanate, e.g., methylene diphenyl diisocyanate and/or poly(methylene diphenyl diisocyanate), where the number of equivalents of isocyanate groups is greater than that of isocyanate reactive groups and stoichiometric excess is converted to isocyanurate bonds, for example, the ratio may be greater than 1.8. Polyurethane foams can be formed by reacting a polyol, e.g., a polyester polyol or a polyether polyol, and an isocyanate, e.g., methylene diphenyl diisocyanate and/or poly(methylene diphenyl diisocyanate), where the ratio of equivalents of isocyanate groups to that of isocyanate reactive groups is less than 1.8. Phenolic foams can be formed by reacting a phenol, e.g., carbolic acid, and an aldehyde, e.g., formaldehyde. Forming the foam material 104 may also include employing a blowing agent, a surfactant, and/or a catalyst.

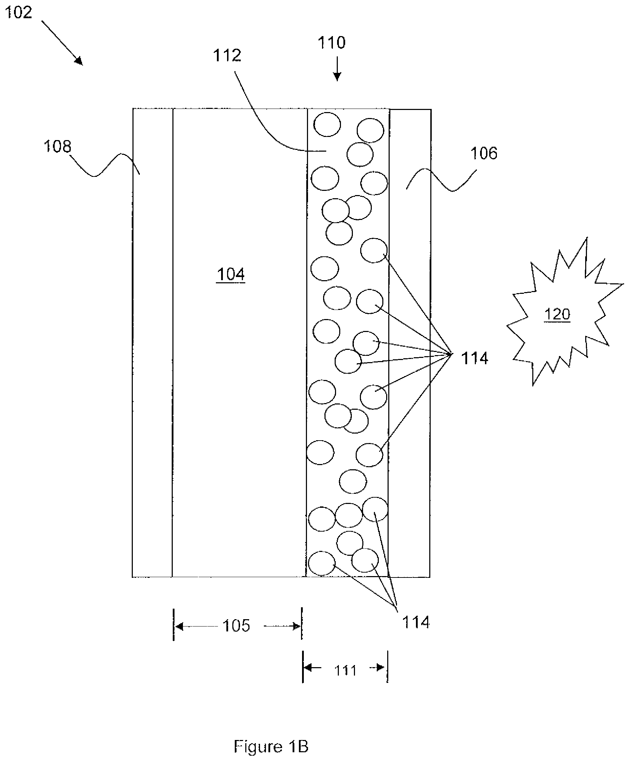

Figure 1B is cross-sectional view of Figure 1A taken along cut line 1A-1A of Figure 1A. As illustrated in Figure 1B, the foam material 104 is located between the first facing 106 and the second facing 108 of fire resistant structure 102. The first facing 106 and the second facing 108 may be a variety of materials, e.g., a material suitable for composite building materials. For example, in accordance with a number of embodiments of the present disclosure, the first facing 106 and the second facing 108 can each independently be formed from aluminum, steel, stainless steel, copper, glass fiber-reinforced plastic, gypsum, or a combination thereof, among other materials. The first facing 106 and the second facing 108 can each independently have a thickness of 0.05 millimeters to 25.00 millimeters. All individual values and sub-ranges from 0.05 millimeters to 25.00 millimeters are included herein and disclosed herein; for example, the first facing 106 and the second facing 108 can each independently have a thickness from an upper limit of 25.00 millimeters, 20.00 millimeters, or 15.00 millimeters to a lower limit of 0.05 millimeters, 0.10 millimeters, or 0.20 millimeters. For example, the first facing 106 and the second facing 108 can each independently have a thickness of 0.05 millimeters to 25.00 millimeters, 0.10 millimeters to 20.00 millimeters, or 0.20 millimeters to 15.00 millimeters.

The foam material 104 can have a thickness 105 of 3 millimeters to 300 millimeters. All individual values and sub-ranges from 3 millimeters to 300 millimeters are included herein and disclosed herein; for example, the foam material can have a thickness from an upper limit of 300 millimeters, 250 millimeters, or 200 millimeters to a lower limit of 3 millimeters, 5 millimeters, or 7 millimeters. For example, the foam material can have a thickness of 3 millimeters to 300 millimeters, 5 millimeters to 250 millimeters, or 7 millimeters to 200 millimeters.

In accordance with a number of embodiments of the present disclosure, the fire resistant structure 102 includes the geopolymer-aerogel composite layer 110 between the foam material 104 and the first facing 106. The geopolymer-aerogel composite layer 110 can include the geopolymer 112 and aerogel 114, as discussed herein.

As discussed herein, the geopolymer-aerogel composites, e.g., the geopolymer-aerogel composite layer 110, may provide improved fire resistance for structural insulating panels disclosed herein, as compared to other panel approaches, such as panels not having the geopolymer-aerogel composite. The geopolymer-aerogel composite layer 110 can provide that the foam material 104 will receive less thermal energy, as compared to panels not having the geopolymer-aerogel composite layer 110, when exposed to similar heating. As an example, fire resistance can be determined by exposing a material, e.g., the fire resistant structure 102, to heating from a furnace and thereafter measuring a temperature rise with time on a side of the material opposite to the furnace and/or at a certain distance across a thickness of the material. Achieving a lower temperature on a portion of the material, as compared to a corresponding temperature on another material, under similar heating conditions can be considered an improved fire resistance.

As illustrated in Figure 1B, the geopolymer-aerogel composite layer 110 can be adjacent, e.g., on, the foam material 104. However, embodiments are not so limited. For example, the geopolymer-aerogel composite layer 110 can be separated, partially or wholly, from the foam material 104 by an adhesive material that bonds the geopolymer-aerogel composite layer 110 to the foam material 104. The adhesive material can include a crosslinking adhesive, such as a thermoset adhesive. For example, the adhesive material can include a polyisocyanurate, a urethane, e.g., a urethane glue, an epoxy system, or a sulfonated polystyrene, among other thermoset adhesives.

The geopolymer-aerogel composite layer 110 can have a thickness 111 of 0.5 millimeters to 100 millimeters. All individual values and sub-ranges from 0.5 millimeters to 100 millimeters are included herein and disclosed herein; for example, the geopolymer-aerogel composite layer 110 can have a thickness 111 from an upper limit of 100 millimeters, 80 millimeters, or 60 millimeters to a lower limit of 0.5 millimeters, 3 millimeters, or 5 millimeters. For example, the geopolymer-aerogel composite layer 110 can have a thickness 111 of 0.5 millimeters to 100 millimeters, 3 millimeters to 80 millimeters, or 5 millimeters to 60 millimeters.

Referring again to Figure 1B, in accordance with a number of embodiments of the present disclosure, the first facing 106 can be configured to face a heat source 120, e.g., a fire, among other heat sources. In the example illustrated in Figure 1B, heat can travel from heat source 120 through the first facing 106 and the geopolymer-aerogel composite layer 110 to the foam material 104. Locating the geopolymer-aerogel composite layer 110 in front of the foam material 104, relative to heat source 120 may help to provide a desirable effectiveness of the geopolymer-aerogel composite layer 110 to help protect the foam material 104 and/or provide the fire resistant structure 102 with an improved fire resistance.

Figure 2 is cross-sectional view of a fire resistant structure 202 in accordance with a number of embodiments of the present disclosure. As shown in Figure 2, the fire resistant structure 202 can include more than one geopolymer-aerogel composite layer, e.g., geopolymer-aerogel composite layer 210-1 and a second geopolymer-aerogel composite layer 210-2. The second geopolymer-aerogel composite layer 210-2 can have similar properties as the geopolymer-aerogel composite layer 210-1, as described herein. As shown in Figure 2, the second geopolymer-aerogel composite layer 210-2 can be located between the foam material 204 and the second facing 208. While Figure 2 shows two geopolymer-aerogel composite layers 210-1, 210-2, embodiments are not so limited. For example, the fire resistant structures disclosed herein can include three geopolymer-aerogel composite layers, four geopolymer-aerogel composite layers, or even more geopolymer-aerogel composite layers.

The above description has been made in an illustrative fashion, and not a restrictive one. The scope of the various embodiments of the present disclosure includes other applications and/or components that will be apparent to those of skill in the art upon reviewing the above description.

### EXAMPLES

In the Examples, various terms and designations for materials were used including, for example, the following:
Sodium silicate solution (an alkaline activator, Grade 52 sodium silicate solution, available from the Occidental Chemical Corporation); fly ash (aluminosilicate reactant, Class F fly ash, available from BORAL®); surfactant (Pluonic® P84, block copolymer non-ionic surfactant, available from BASF); continuous medium (water, deionized, laboratory produced); silica aerogel additive (Enova IC3110, available from Cabot Corporation); facing (0.3 millimeter thick type 304 stainless steel plate).

### Example 1

A geopolymer precursor-aerogel composition, Example 1, was prepared as follows. Water (19.5 grams) and sodium silicate solution (35.5 grams) were added to a container and mixed. Pluonic P84 (0.834 grams) was dissolved into the contents of the container and mixed. Fly ash (89.5 grams) was added to the contents of the container and mixed with a high shear mixer at 700-900 rotations per minute (Model LIU08 mixer, available from LIGHTNIN®). Silica aerogel additive (3.186 grams) was added to the contents of the container and mixed.

### Example 2

A geopolymer-aerogel composite, Example 2, was formed as follows. Example 1 was cast into a die and cured for 12 hours at 60 °C. The die was 76.2 millimeters long, 76.2 millimeters wide, and 10 millimeters deep. Example 2 was determined to be 30 volume percent silica aerogel additive and 70 volume percent geopolymer.

### Example 3

A geopolymer precursor-aerogel composition, Example 3, was prepared as Example 1 with the changes: water (29.5 grams), sodium silicate solution (35.5 grams), Pluonic P84 (0.834 grams), fly ash (89.5 grams), and silica aerogel additive (17.350 grams) was used to form Example 3.

### Example 4

A geopolymer-aerogel composite, Example 4, was formed as Example 2, with the change that Example 3 was used instead of Example 1. Example 4 was determined to be 70 volume percent silica aerogel additive and 30 volume percent geopolymer.

### Comparative Example_A

A geopolymer precursor composition, Comparative Example A, was prepared as follows. Water (3.0 grams) and sodium silicate solution (71.0 grams) were added to a container and mixed. Fly ash (179.0 grams) was added to the contents of the container and mixed with a high shear mixer at 700-900 rotations per minute (Model L1U08 mixer, available from LIGHTNIN®).

### Comparative Example B

A geopolymer, Comparative Example B, was prepared as follows. Comparative Example A was cast into a die and cured for 12 hours at 60 °C to form the geopolymer. The die was 76.2 millimeters long, 76.2 millimeters wide, and 10 millimeters deep.

The densities of Example 2, Example 4, and Comparative Example B were determined. The data in Table 1 indicate the densities of Example 2, Example 4. The data in Table 2 indicates the density of Comparative Example B.

**Table 1**

| | Density (g/cm³) |
|---|---|
| Example 2 | 1.127 |
| Example 4 | 0.656 |

**Table 2**

| | Density (g/cm³) |
|---|---|
| Comparative Example B | 1.833 |

The data of Tables 1-2 show that the densities of both Example 2 and Example 4 were less than the density of Comparative Example B. The lower densities of Example 2 and Example 4, as compared to that of Comparative Example B, indicate that the silica aerogel additive was not consumed during the geopolymerization process and that the aerogel additive was not a significant source of silica for the geopolymer. The lower densities of Example 2 and Example 4, as compared to that of Comparative Example B, indicate that the aerogel additive remained intact during the geopolymerization process and indicate that Example 2 and Example 4 were each a geopolymer-aerogel composite.

The thermal conductivities of Example 2, Example 4, and Comparative Example B were determined by a hot disk technique. The data in Table 3 indicate the thermal conductivities in watts per meter kelvin (W/(m·K)) of Example 2 and Example 4. The data in Table 4 indicate the thermal conductivity in (W/(m·K)) of Comparative Example B.

**Table 3**

| | Thermal Conductivity at 24 °C (W/(m·K)) | Thermal Conductivity at 60 °C (W/(m·K)) | Thermal Conductivity at 100 °C (W/(m·K)) | Thermal Conductivity at 150 °C (W/(m·K)) | Thermal Conductivity at 200 °C (W/(m·K)) |
|---|---|---|---|---|---|
| Example 2 | 0.257 | 0.277 | 0.297 | 0.280 | 0.271 |
| Example 4 | 0.158 | 0.173 | 0.154 | 0.155 | 0.151 |

**Table 4**

| | Thermal Conductivity at 24 °C (W/(m·K)) | Thermal Conductivity at 60 °C (W/(m·K)) | Thermal Conductivity at 100°C (W/(m·K)) | Thermal Conductivity at 150 °C (W/(m·K)) | Thermal Conductivity at 200 °C (W/(m·K)) |
|---|---|---|---|---|---|
| Comparative Example B | 0.577 | 0.588 | 0.576 | 0.559 | 0.563 |

The data of Tables 3-4 show that the thermal conductivities of both Example 2 and Example 4 were less than the thermal conductivity of Comparative Example B for each temperature tested. The lower thermal conductivities of Example 2 and Example 4, as compared to that of Comparative Example B, indicate that the silica aerogel additive was not consumed during the geopolymerization process and that the aerogel additive was not a significant source of silica for the geopolymer. The lower thermal conductivities of Example 2 and Example 4, as compared to that of Comparative Example B, indicate that the aerogel additive remained intact during the geopolymerization process and indicate that Example 2 and Example 4 were each a geopolymer-aerogel composite.

### Example 5

A fire resistant structure, Example 5, was fabricated as follows. A geopolymer precursor-aerogel composition prepared as Example 1 was cast into a die; then a foam material was pressed onto the cast geopolymer precursor-aerogel composition. The cast geopolymer precursor-aerogel composition cured for 12 hours at 60 °C to form a 10 millimeter thick geopolymer-aerogel composite layer bonded to the foam material. The foam material was polyisocyanurate foam made with VORATHERM ™ CN604 polyisocyanurate system having a thickness of 150 millimeters, available from The Dow Chemical Company. A 0.3 millimeter thick type 304 stainless steel plate was attached to the geopolymer aerogel composite layer with a non-foaming polyurethane (FoamFast 74, available from 3M™).

### Comparative Example C

Comparative Example C was fabricated as follows. A geopolymer precursor composition prepared as Comparative Example A was cast into a die; then a foam material was pressed onto the cast geopolymer precursor composition. The cast geopolymer precursor composition cured for 12 hours at 60 °C to form a 10 millimeter thick geopolymer layer bonded to the foam material. The foam material was polyisocyanurate foam made with VORATHERM ™ CN604 polyisocyanurate system having a thickness of 150 millimeters, available from The Dow Chemical Company. A 0.3 millimeter thick type 304 stainless steel plate was attached to the geopolymer layer with a non-foaming polyurethane (FoamFast 74, available from 3M™).

Fire resistance of Example 5 and Comparative Example C was tested as follows. A 76.2 millimeter by 76.2 millimeter hole was formed in the door of a THERMO SCIENTIFIC® Thermolyne Model 48000 furnace. The furnace was heated to 1000 °C following a temperature versus time curve in accordance to the one used in EN 1361-1 testing standard, which is the same heating curve in ISO-834-1. Each of the steel plates of Example 5 and Comparative Example C was respectively clamped to the hole in the furnace door. Thermocouples were placed into the foam material of Example 5 at 80 millimeters, 100 millimeters, and 120 millimeters, as measured from the stainless steel plate exposed to the heat source to record temperatures and determine the fire resistance. For experimental purposes Example 5 did not include a second facing. Table 5 shows data corresponding to the temperatures for each thermocouple location for Example 5 measured at one hour and at two hours. Thermocouples were placed into the foam material of Comparative Example C at 80 millimeters, 100 millimeters, and 120 millimeters, as measured from the stainless steel plate exposed to the heat source to record temperatures and determine the fire resistance. Comparative Example C did not include a second facing. Table 6 shows data corresponding to the temperatures for each thermocouple location for Comparative Example C measured at one hour and at two hours.

**Table 5**

| | Test time 1 hour | Test time 2 hours |
|---|---|---|
| Example 5 80 mm thermocouple | 126 °C | 227 °C |
| Example 5 100 mm thermocouple | 67 °C | 129 °C |
| Example 5 120 mm thermocouple | 58 °C | 99 °C |

**Table 6**

| | Test time 1 hour | Test time 2 hours |
|---|---|---|
| Comparative Example C 80 mm thermocouple | 134 °C | 247 °C |
| Comparative Example C 100 mm thermocouple | 70 °C | 146 °C |
| Comparative Example C 120 mm thermocouple | 65 °C | 113 °C |

The data of Tables 5-6 shows the Example 5 temperatures at each thermocouple location for each test time were lower than Comparative Example C temperatures at each corresponding thermocouple location for same test time. The lower temperatures of Example 5, as compared to Comparative Example C, indicate that Example 5 has an improved fire resistance, as compared to those of Comparative Example C.

## Claims

1. A fire resistant structure comprising:
a foam material located between a first facing and a second facing, wherein the foam material is selected from a polyurethane foam, a polyisocyanurate foam, a phenolic foam, or combinations thereof; and
a geopolymer-aerogel composite layer between the foam material and the first facing, wherein the geopolymer-aerogel composite layer is formed by curing a geopolymer precursor-aerogel composition including an aluminosilicate reactant, an alkaline activator, a silica aerogel additive, and a continuous medium.

2. The structure of claim 1, wherein the aluminosilicate reactant is from 10 weight percent to 90 weight percent of a composition weight, the alkaline activator is from 10 weight percent to 90 weight percent of the composition weight, the silica aerogel additive is from 0.25 weight percent to 50 weight percent of the composition weight, and the continuous medium is from 10 weight percent to 90 weight percent of the composition weight, such that the aluminosilicate reactant weight percent, the alkaline activator weight percent, the silica aerogel additive weight percent, and the continuous medium weight percent sum to 100 weight percent of the composition weight.

3. The structure of claim 1, wherein the geopolymer-aerogel composite layer has a thickness of 0.5 millimeters to 100 millimeters.

4. The structure of any one of claims 1-3, wherein the geopolymer-aerogel composite layer has a density from 0.300 grams per cubic centimeter to 1.500 grams per cubic centimeter.

5. The structure of any one of claims 1-4, wherein the silica aerogel additive is from 5 volume percent to 95 volume percent of the geopolymer-aerogel composite layer.

6. The structure of any one of claims 1-5, including a second geopolymer-aerogel composite layer, wherein the second geopolymer-aerogel composite layer is located between the foam material and the second facing.

7. The structure of claim 6, wherein the second geopolymer-aerogel composite layer has a thickness of 0.5 millimeters to 100 millimeters.

## Patentansprüche

1. Eine feuerbeständige Struktur, die Folgendes beinhaltet:
ein Schaumstoffmaterial, das sich zwischen einer ersten Verkleidung und einer zweiten Verkleidung befindet, wobei das Schaumstoffmaterial aus einem Polyurethanschaumstoff, einem Polyisocyanuratschaumstoff, einem Phenolschaumstoff oder Kombinationen davon ausgewählt ist; und
eine Geopolymer-Aerogel-Verbundschicht zwischen dem Schaumstoffmaterial und der ersten Verkleidung, wobei die Geopolymer-Aerogel-Verbundschicht durch Härten einer Geopolymervorläufer-Aerogel-Zusammensetzung gebildet wird, die einen Aluminiumsilicat-Reaktanten, einen alkalischen Aktivator, einen Siliciumdioxid-Aerogel-Zusatzstoff und ein kontinuierliches Medium umfasst.

2. Struktur gemäß Anspruch 1, wobei der Aluminiumsilicat-Reaktant von 10 Gewichtsprozent bis 90 Gewichtsprozent eines Zusammensetzungsgewichts ausmacht, wobei der alkalische Aktivator von 10 Gewichtsprozent bis 90 Gewichtsprozent des Zusammensetzungsgewichts ausmacht und der Siliciumdioxid-Aerogel-Zusatzstoff von 0,25 Gewichtsprozent bis 50 Gewichtsprozent des Zusammensetzungsgewichts ausmacht, und das kontinuierliche Medium von 10 Gewichtsprozent bis 90 Gewichtsprozent des Zusammensetzungsgewichts ausmacht, sodass der Gewichtsprozentsatz des Aluminiumsilicat-Reaktanten, der Gewichtsprozentsatz des alkalischen Aktivators, der Gewichtsprozentsatz des Siliciumdioxid-Aerogel-Zusatzstoffs und der Gewichtsprozentsatz des kontinuierlichen Mediums sich zu 100 Gewichtsprozent des Zusammensetzungsgewichts summieren.

3. Struktur gemäß Anspruch 1, wobei die Geopolymer-Aerogel-Verbundschicht eine Dicke von 0,5 Millimeter bis 100 Millimeter aufweist.

4. Struktur gemäß einem der Ansprüche 1-3, wobei die Geopolymer-Aerogel-Verbundschicht eine Dichte von 0,300 Gramm pro Kubikzentimeter bis 1 500 Gramm pro Kubikzentimeter aufweist.

5. Struktur gemäß einem der Ansprüche 1-4, wobei der Siliciumdioxid-Aerogel-Zusatzstoff von 5 Volumenprozent bis 95 Volumenprozent der Geopolymer-Aerogel-Verbundschicht ausmacht.

6. Struktur gemäß einem der Ansprüche 1-5, umfassend eine zweite Geopolymer-Aerogel-Verbundschicht, wobei sich die zweite Geopolymer-Aerogel-Verbundschicht zwischen dem Schaumstoffmaterial und der zweiten Verkleidung befindet.

7. Struktur gemäß Anspruch 6, wobei die zweite Geopolymer-Aerogel-Verbundschicht eine Dicke von 0,5 Millimeter bis 100 Millimeter aufweist.

## Revendications

1. Une structure résistant au feu comprenant :
un matériau en mousse situé entre un premier revêtement et un deuxième revêtement, où le matériau en mousse est sélectionné parmi une mousse de polyuréthane, une mousse de polyisocyanurate, une mousse phénolique, ou des combinaisons de celles-ci ; et
une couche composite de géopolymère-aérogel entre le matériau en mousse et le premier revêtement, où la couche composite de géopolymère-aérogel est formée par durcissement d'une composition de précurseur de géopolymère-aérogel incluant un réactif aluminosilicate, un activateur alcalin, un additif aérogel de silice, et un milieu continu.

2. La structure de la revendication 1, où le réactif aluminosilicate fait de 10 pour cent poids à 90 pour cent en poids d'un poids de la composition, l'activateur alcalin fait de 10 pour cent en poids à 90 pour cent en poids du poids de la composition, l'additif aérogel de silice fait de 0,25 pour cent en poids à 50 pour cent en poids du poids de la composition, et le milieu continu fait de 10 pour cent poids à 90 pour cent en poids du poids de la composition, de telle sorte que la somme du pourcentage en poids du réactif aluminosilicate, du pourcentage en poids de l'activateur alcalin, du pourcentage en poids de l'additif aérogel de silice, et du pourcentage en poids du milieu continu fait 100 pour cent en poids du poids de la composition.

3. La structure de la revendication 1, où la couche composite de géopolymère-aérogel a une épaisseur de 0,5 millimètre à 100 millimètres.

4. La structure de n'importe laquelle des revendications 1 à 3, où la couche composite de géopolymère-aérogel a une masse volumique allant de 0,300 gramme par centimètre cube à 1,500 gramme par centimètre cube.

5. La structure de n'importe laquelle des revendications 1 à 4, où l'additif aérogel de silice fait de 5 pour cent en volume à 95 pour cent en volume de la couche composite de géopolymère-aérogel.

6. La structure de n'importe laquelle des revendications 1 à 5, incluant une deuxième couche composite de géopolymère-aérogel, où la deuxième couche composite de géopolymère-aérogel est située entre le matériau en mousse et le deuxième revêtement.

7. La structure de la revendication 6, où la deuxième couche composite de géopolymère-aérogel a une épaisseur de 0,5 millimètre à 100 millimètres.
